Europäisches Patentamt

(19) European Patent Office

Office européen des brevets

(11) **EP 1 221 777 B1**

(12) **EUROPEAN PATENT SPECIFICATION**

(45) Date of publication and mention
of the grant of the patent:
**09.08.2006 Bulletin 2006/32**

(51) Int Cl.:
***H04B 17/00*** *(2006.01)*

(21) Application number: **00610133.1**

(22) Date of filing: **20.12.2000**

(54) **Method and apparatus for classifying interference**

Verfahren und Vorrichtung zur Interferenz-Klassifikation

Méthode et appareil de classification d'interférence

(84) Designated Contracting States:
**AT BE CH CY DE DK ES FI FR GB GR IE IT LI LU
MC NL PT SE TR**

(43) Date of publication of application:
**10.07.2002 Bulletin 2002/28**

(73) Proprietor: **TELEFONAKTIEBOLAGET LM
ERICSSON (publ)
164 83 Stockholm (SE)**

(72) Inventors:
• **Nilsson, Johan
236 38 Höllviken (SE)**

• **Östberg, Christer
245 44 Staffanstorp (SE)**
• **Eriksson, Hakan
224 72 Lund (SE)**

(74) Representative: **Boesen, Johnny Peder et al
Zacco Denmark A/S
Hans Bekkevolds Allé 7
2900 Hellerup (DK)**

(56) References cited:
**GB-A- 2 347 825        US-A- 5 144 642
US-A- 5 568 480        US-A- 6 131 013
US-A- 6 144 861**

EP 1 221 777 B1

**Description**

This invention relates to a mobile communications terminal for use in a cellular communications system, comprising an electronic circuit for receiving a wire-less communication signal carrying signal channels having processing means for extracting the signal channels.

A typical cellular telecommunications system cell is organised about a base-station equipped with multiplexing means for transmitting communication signals carrying signal channels from a wired telephone net onto a radio frequency carrier that is broadcast by an antenna system over an area that the cell is designate to cover. A set of individual mobile subscriber stations - i.e. a mobile communications terminal - are each equipped to receive the broadcast frequency carrier and to de-multiplex the specific channel the terminal is intended to receive. Typically, two-way communication is supported and the mobile communications terminal is adapted to transmit signals to the base-station for subsequent multiplexing and distribution to a wired net or another base-station.

In such a wire-less communications system, an assigned radio frequency bandwidth of frequencies is simultaneously shared by multiple subscribers using various multiple access techniques e.g. code division multiple access (CDMA). In CDMA systems multiple subscribers can be accommodated on a single carrier in which each subscriber is assigned one or multiple codes that is used to carry information. A code waveform taken from a set of orthogonal waveforms allows the system to transmit information in separate information channels. These separate information channels can be used to carry individual information to different users and/or enable multiple information streams to one user.

However, in such systems different types of interference may occur and diminish the communication quality. The interference situation can vary from time to time depending on the location of the mobile communications terminal relative to the base-station, the location of other base-stations, the actual load of the system, and the type of traffic on the communication channels. Furthermore, moving the mobile communications terminal relative to the base-station and movement of other objects affecting the transmission path between the base-station and the mobile communications terminal can affect the interference situation.

US 6,131,013 describes an apparatus for performing targeted interference suppression, comprising a receiver unit with an interference classifier and an interference suppressor. The interference classifier outputs a signal indicative of classification of each interference type and the suppressor selects one of a plurality of suppression methods best suited to suppress a determined interference type. Thus, US 6,131,013 discloses that additional processing means are needed to derive features that are unique to the interference/jamming components in the received signal. These additional processing means adds complexity and cost to a receiver terminal.

US 5,568,480 describes frequency division multiplex radio communication systems and discloses assessment of interference and other signals in a radio communications system by performing a plurality of narrow-band measurements at a plurality of different frequencies in the telecommunications channels. The frequency domain behaviour of telecommunications signals is evaluated to assess the interference in the telecommunications channels by means of numerous narrowband measurements.

Basically, interference can be divided into two groups:

1. inter-cell interference, and

2. intra-cell interference.

Inter-cell interference originates from one or more neighbouring base stations. The fading of inter-cell interference is uncorrelated with the fading of the communication signal. In the following, inter-cell interference refers to interference that has an uncorrelated fading or no fading. Thus, inter-cell interference can be caused by thermal noise etc.

Intra-cell interference originates from the same base station as the base station communicating with the mobile communications terminal. Intra-cell interference is due to reception of non-orthogonal signals transmitted from the base station (e.g. the synchronisation channel in WCDMA) or due to multi-path propagation of the communication signal). One important feature of intra-cell interference is that it travels the same path as the communication signal and thus experience the same fading.

The type of interference that a communication signal is distorted with at reception by a mobile communication terminal is an important parameter for optimisation of several algorithms in the terminal and in turn for improving the quality of the wire-less communication.

There exists known methods for classifying interference by means of spectrum estimation techniques. However, these methods are very complex and involves large processing means. The different types of interference may degrade performance of a mobile communications terminal. Thus there is a need for a less complex method that can be implemented in small-sized and/or mobile communication terminals.

Therefore, the prior art involves the problem that a present type of interference affecting performance in the form of transmission capacity and/or quality of a mobile communications terminal is not determined - thereby not making it possible to take the type of interference into account when communicating by means of the mobile communications terminal.

Thus an object of this invention is to provide a mobile communications terminal for use in a cellular communications system capable of determining a present type of interference.

This is achieved when the mobile communications terminal mentioned in the opening paragraph is characterized in that said processing means are arranged to provide at least one of the following signals: an Automatic Gain Control (AGC) signal; a Transmission-Power-Control (TPC) signal an interference estimate signal; and the electronic circuit is adapted to classify a type of interference, affecting the communications quality, by evaluating time domain behaviour of at least one of said signals provided by the processing means, whereby said signals provide information for classifying a type of interference in one of at least two predetermined classes of interference.

Consequently, it is possible to determine a present type of interference by evaluating internal signals that are present in a standard mobile communications terminal. Thus, it is possible to take the type of interference into account when correcting a received communications signal - thereby providing for a better performance of the mobile communications terminal. Further, only simple means for classifying the type of interference are needed since the signals having information for classifying a present type of interference are already present internally for verifying, adjusting, or demodulating the communication signals.

The invention will be explained more fully below in connection with a preferred embodiment and with reference to the drawing, in which:

fig. 1 shows a cell-structure in a cellular communications system;

fig. 2 shows a block-diagram of a mobile communications terminal;

fig. 3 shows a classifier and two algorithms;

fig. 4 shows different variables available in a mobile communications terminal as a function of time in inter-cell and intra-cell interference situations;

fig. 5 shows a flow-chart for a method of classifying interference; and

fig. 6 shows a block-diagram of a mobile communications terminal according to the invention wherein the determined interference type is used to improve the interference power estimate.

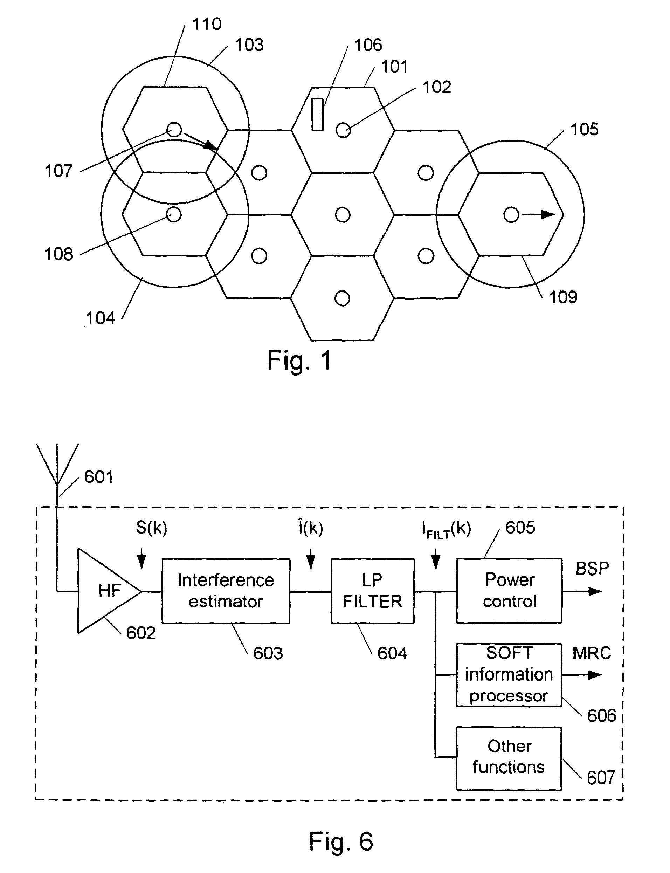

Fig. 1 shows a cell-structure in a cellular communications system. The cell-structure comprises a number of cells 101 each of them including a base-station 102. In a mobile communications system, the base-station 102 is adapted to provide wire-less communication with one - or typically more - mobile communication terminals 106 located within the cell and to provide communication with other base-stations or switching units by means of a wired net.

The base-stations are located to provide a desired level of communication coverage for wire-less communication over a given geographical area. Wire-less communication signals emitted from a base-station with a specified power-level will be damped as a function of the distance to the transmitter. Further, since propagation of the wire-less communication signals cannot be controlled precisely due to the presence of buildings, different types of landscape features etc. it will be possible in some areas between two base-stations 107 and 108 to detect signals transmitted from both of the base-stations. Such an area is illustrated as the area covered by both of the circles 103 and 104 that indicates a radiation pattern from the base-stations 107 and 108, respectively.

In a mobile communications terminal, circuitry is adapted to select one or many out of two or more base-stations capable of providing communication with the base-stations e.g. to select the base-station providing the best communication quality. However, other base-stations still transmits communication signals that can and will interfere with communication signals from a selected base-station thus degrading the communication quality otherwise obtainable from the selected base-station. This is called inter-cell interference.

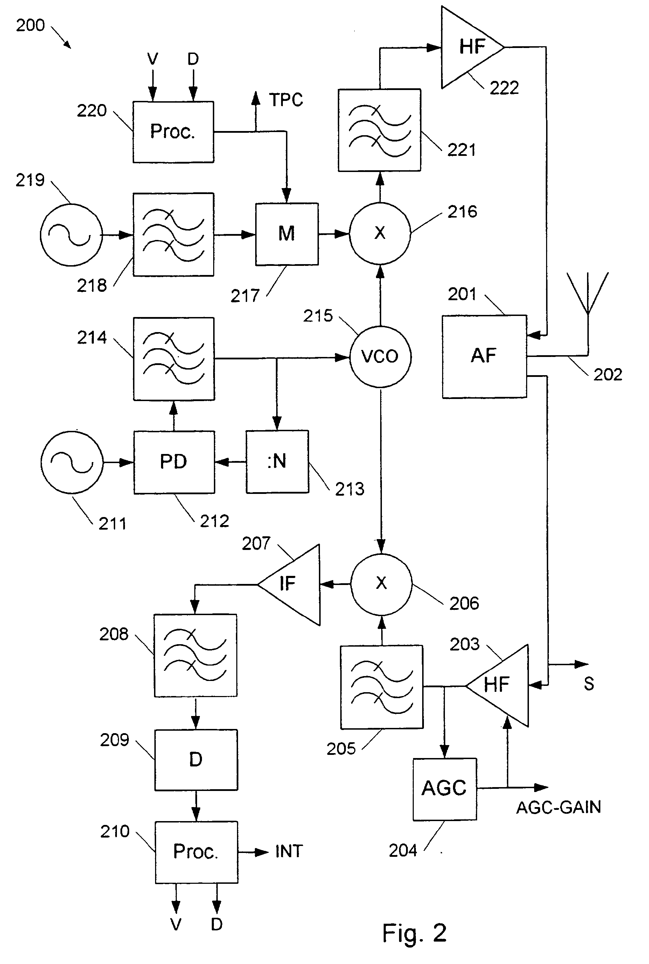

Fig. 2 shows a block-diagram of a typical mobile communications terminal. It is shown how signals used for common purposes e.g. demodulation, gain control, etc. in the mobile communications terminal can be detected for the special purpose of classifying interference. A wire-less communication signal can be received by an antenna 202 connected to an antenna filter 201 for passing the communication signal and rejecting other signals. The output of the antenna filter is connected to a high frequency amplifier 203 that is controlled by an automatic gain control unit 204 to compensate for a varying signal strength of the received communication signal. The signal AGC-GAIN is a signal controlling the gain of the amplifier 203. According to the invention, such an AGC-GAIN signal can be selected as a signal having information for classifying interference.

The output of the amplifier 203 is provided as a first input signal to a mixer 206 via a band-pass filter 205 removing high-frequency noise and low-frequency components i.a. from the automatic gain control unit. A second input signal to the mixer 206 is provided by a frequency synthesis unit 211 via a phase-locked loop comprising a controlled oscillator 215, a frequency divider 213, a phase-detector 212, and a band-pass filter 214. By means of the mixer 206, the communication signal is shifted down in frequency to an intermediate frequency IF. The communication signal at the intermediate frequency is, output from the mixer 206, is fed to a demodulator 209 via an intermediate frequency amplifier 207 and a band-pass filter 208 with a pass-band around the intermediate frequency. The processor 210 is connected to the demodulator 209 to decode information e.g. voice, V, and data, D, transmitted on the communications channel.

In order to estimate the quality of the received information the processor 210 is adapted to calculate an interference power estimate. Typically, an interference estimate, INT, is calculated based on the variance of received known symbols (so-called pilots) i.e. a test sequence transmitted by the base-station. According to the invention, such an interference power estimate can be selected as a signal having information for classifying interference. Moreover, the processor 220 is adapted to calculate a signal S that represents the strength of the communication signal from the base-station the terminal is in communication with. In a so-called 3GPP the signal S can be measured as the power at the common pilot channel (CPICH). However, both in 3GPP systems and in other systems S can be measured in various ways.

The signal S representing the strength of the received communication signal can be monitored and selected as a signal having information for classifying interference.

In order to transmit information e.g. voice, V, and data, D, the information is encoded in the processor 220 to transmit this information on a communications channel. The information is modulated on a intermediate frequency IF by means of a modulator 217. The intermediate frequency IF is supplied by a frequency synthesis unit 219 via a band-pass filter 218. The modulator 217 is connected to a mixer 216 for up-shifting the signal at the intermediate frequency to a high-frequency carrier. The up-shifted signal is supplied to the antenna 202 via a band-pass filter 221, a high-frequency amplifier 222, and an antenna filter 201. According to various standards prescribing communication protocols for mobile wire-less communication there is incorporated a so-called Transmission-Power-Control, TPC, command in the communications protocols. The processor 220 is adapted to communicate such TPC commands to a base-station in response to a monitoring of a received communication signal. Thus, the mobile communications terminal can request the base-station to transmit communication signal to the terminal with more power to obtain a sufficient communication quality if the received communication signal is too weak and vice versa. According to the invention, such Transmission-Power-Control commands can be selected as a signal having information for classifying interference.

It should be noted that although a homodyne receiver has been referred to, other types of receivers e.g. homodyne receivers can include the above mentioned or other types of signals having information for classifying interference.

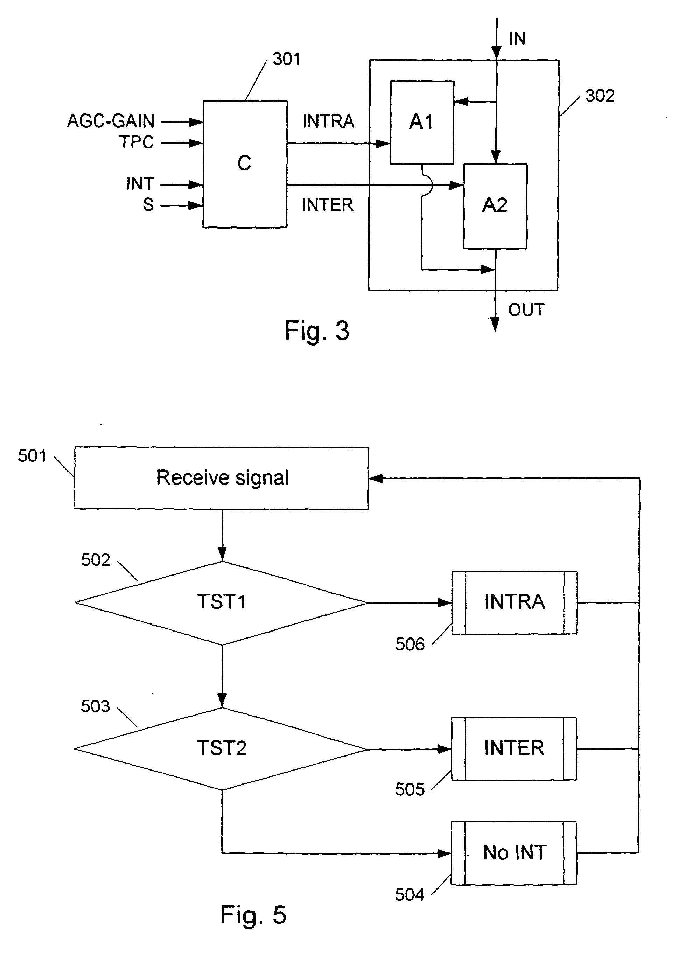

Fig. 3 shows a classifier for determining a type of interference. The classifier 301 is connected to receive the signals AGC-GAIN, TPC, INT, and S and adapted to classify an interference affecting at least one of the signals GAIN, TPC, INT, and S as either inter-cell or intra-cell interference. The classifier 301 provides two binary signals INTRA and INTER. The binary signals can be used for selecting different algorithms depending on the type of interference determined by classifier.

A truth-table for the binary signals and an associated action is stated in table 1 below.

Table 1.

| Action: | | INTRA | INTER |
|---|---|---|---|
| A2 enabled A1 disabled | Inter-cell interference | 0 | 1 |
| A1 enabled A2 disabled | Intra-cell interference | 1 | 0 |

When intra-cell interference is detected, the algorithm A1 is enabled and when inter-cell interference is detected, the algorithm A2 is enabled. The algorithms receives input data via the port IN and provides output data via the port OUT. Instead of enabling different algorithms in response to signals from the classifier 501 it can be expedient to load an algorithm with different sets of parameters that are selected or calculated in response to the signals from the classifier.

Inter-cell interference can be considered as stationary white noise since communication signals from base-stations in neighbour cells correlates to a small extend only with communication signals from a selected base-station. Therefore, it is convenient to reconstruct i.e. enhance the quality e.g. by enhancing the signal-to-noise ratio of the communication signal with a filter - providing some type of averaging - that has a relatively large time-constant.

Intra-cell interference, on the other hand, should not be considered as stationary white noise since a communication signal travelling along different paths creates time-shifted and amplitude varying echoes only, thus having a relatively large correlation with each other. This in turn creates an amplitude varying communication signal. Therefore, it is convenient to reconstruct the communication signal with a filter providing some type of averaging over a relatively short time interval, e.g. by means of a moving average filter..

The algorithms A1 and A2 and the classifier 301 can be embodied as program code for the processor 220 - and/or be embodied directly in an application specific integrated circuit, ASIC. The algorithms A1 and A2 can implement two digital low-pass filters e.g. with a relatively high and a relatively low bandwidth.

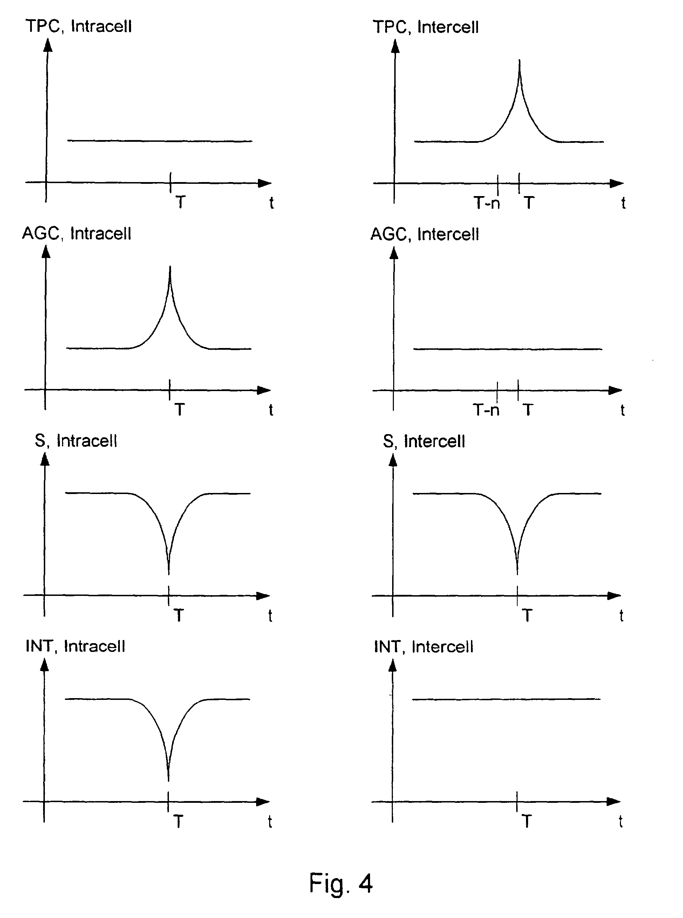

Fig. 4 shows different variables/signals available in a mobile communications terminal as a function of time t in inter-cell and intra-cell interference situations. These signals include information for classifying i.e. determining a type of interference and may therefore be selected for that purpose. The signals can be detected in the flow-chart shown in fig. 5.

For all the signals shown it is assumed that maximum interference appears at time t=T. That is, the interference level has a maximum (peak) value at time t=T or - alternatively - that the interference has a minimum (a fading dip) at time t=T.

When intra-cell interference is present, the TPC signal will remain substantially constant over time, the AGC signal will peak in amplitude, and the signal strength, S, and the interference estimate will dip in amplitude.

When inter-cell interference is present, the AGC signal and the interference estimate, INT, will remain substantially constant over time, the TPC signal will peak in amplitude, and the signal strength, S, will dip in amplitude.

The signals can be continues analogue signals or discrete digital signals. The signals can be sampled over time and two or more samples at different times can be compared such that it is possible to detect the signal characteristics e.g. a peak, a dip, etc. A signal can be sampled e.g. at time t=T and at time t=T-n.

Fig. 5 shows a flow-chart for a method of classifying interference. The flow-chart illustrates the operation of the classifier 301 in co-operation with the mobile communications terminal in fig. 2. In step 501 a communication signal from a base-station is received. In step 502 it is verified whether a test statement TST1 capable of detecting intra-cell interference based on selected signals is true or false. If the test statement TST1 is true it is determined that intra-cell interference is present. In step 506 the mobile communications terminal is controlled to use parameters that are optimal for receiving intra-cell distorted communication signals.

Otherwise, if the test statement TST1 is false, it is verified whether a test statement TST2 capable of detecting inter-cell interference based on selected signals is true or false. If the test statement TST2 is true it is determined that inter-cell interference is present. In step 505 the mobile communications terminal is controlled to use parameters that are optimal for receiving inter-cell distorted communication signals.

The test statement TST1 capable of detecting intra-cell interference can be stated in numerous ways, e.g. in the following ways:

TST1:   a) ABS(INT(T) - INT(T-n)) < e
        b) ABS(AGC(T) - AGC(T-n)) < e

Likewise, the test statement TST2 capable of detecting inter-cell interference can be stated in numerous ways, e.g. in the following ways:

TST2:   c) ABS(INT(T) - INT(T-n)) > e
        d) ABS (TPC (T) - TPC(T-n)) < e

It should be noted that other alternatives are possible for classifying interference - such alternatives can be found in the field of time series analysis, multivariate statistics, pattern recognition etc.

Fig. 6 shows a block-diagram of a preferred mobile communications terminal according to the invention wherein the determined interference type is used to improve the interference power estimate. The terminal comprises an antenna 601 for receiving a wire-less communication signal that is amplified and converted to a digital signal S(k) in high-frequency amplifier 602. S(k) is a sequence of digital samples where k denotes a sample in the sequence. The digital signal S(k) is provided to an interference estimator 603 that provides an interference estimate in the form of a sequence of digital samples $\hat{I}(k)$. This interference estimate is supplied to a digital low-pass filter 604. The time-domain transfer function for the digital filter can be written as:

$$I_{FILT}(k) = \alpha I_{FILT}(k-1) + (1-\alpha)\hat{I}(k)$$

where $\hat{I}(k)$ is input to the filter, $I_{FILT}(k)$ is output from the filter and $\alpha$ is a filter constant. The number of samples the filter is calculating an average over can be approximated as $1/(1-\alpha)$.

In the case that the dominating interference is classified as inter-cell interference, the interference power estimate is calculated by employing much filtering in the estimation of the interference power estimate. This can be carried out by averaging over a relatively large number of samples, e.g. with $\alpha \approx 0,99$; thereby the filter has a relatively low band-width. Consequently, the variance of the interference power estimate is reduced. This will improve the interference power estimate since in this situation the interference may appear as almost stationary in time (the signals causing the interference are almost uncorrelated with the communication signal).

In the case that present interference is classified as intra-cell interference only limited filtering is applied in the estimation of the interference power estimate. This can be carried out by averaging over a relatively small number of samples, e.g. with $\alpha \approx 0,80$; thereby the filter has a relatively high band-width. In this situation the signals causing the interference is highly correlated with the communication signal (they will appear as echoes with almost the same amplitude as the first arriving signal that is interpreted as the communication signal) and thus will exhibit heavy fluctuations over time.

The output signal from the digital filter 604 is supplied to a power control component 605. This power control component is arranged to communicate with the base station to control the power level of communication signals transmitted to the mobile terminal.

The output signal from the digital filter 604 is also supplied to a soft information processor 606 that provides so-called side information in the form of a Maximum Ratio Combining (MRC) signal. Side information provides a quality measure of the received wireless signal and can in turn be used as reliability information in a process of decoding symbols in the received signal.

The soft information processor 606 receives the filtered symbols and split them into a number of branches; in each branch random values are added to the filtered symbols $I_{FILT}(k)$. In each branch a filter is applied. The bandwidth of these filters are adjusted according to the type of interference. The filters may be low-pass filters where a relatively low cut-off frequency is selected when intra cell interference is present, and where a relatively high cut-off frequency is selected when inter cell interference is present. Signals provided by each of the branches are added with a weight value that equals the signal-to-noise ratio for each branch and subsequently supplied as the Maximum Ratio Combining signal.

Although inter-cell and intra cell-inter interference has been described as two major groups of interference a more precise classification of interference can be used.

The invention can find application in all fields of mobile wire-less communications systems - e.g. in systems allowing for direct terminal-to-terminal communication without involving a base-station.

## Claims

1. A mobile communications terminal for use in a cellular communications system, comprising

   an electronic circuit (200) for receiving a wire-less communications signal carrying signal channels having processing means (201,204,210,220;603,604) for extracting the signal channels,
   **characterized in that**
   said processing means (201,204,210,220;603,604) are arranged to provide at least one of the following signals: an Automatic Gain Control (AGC) signal; a Transmission-Power-Control (TPC) signal; an interference estimate signal; and
   the electronic circuit (200) is adapted to classify a type of interference, affecting the communications quality, by evaluating time domain behaviour of at least one of said signals provided by the processing means (201,204,210,220; 603,604), whereby said signals provide information for classifying a type of interference in one of at least two predetermined classes of interference.

2. A mobile communications terminal according to claim 1, **characterized in that** a first class of interference includes inter-cell interference and that a second class of interference includes intra-cell interference.

3. A mobile communications terminal according to any one of claims 1 and 2, **characterized in that** the processing means (201,204,210,220;603,604) comprises first means (204) with selected signals for adaptively regulating the amplitude of signals processed by the electronic circuit.

4. A mobile communications terminal according to claim 3, **characterized in that** the first means (204) includes Automatic Gain Control means.

5. A mobile communications terminal according to any one of claims 3 and 4, **characterized in that** the first means (201,204,210,220;603,604) includes means (210) with selected signals for communicating commands for controlling transmitted power of a base station capable of communicating with a multitude of mobile communications terminals.

**6.** A mobile communications terminal according to any one of claims 1 through 5, **characterized in that** the processing means (201,204,210,220;603,604) comprises second means with selected signals for monitoring the communications quality (210).

**7.** A mobile communications terminal according to claim 6, **characterized in that** the second means includes means (210) for monitoring the signal strength of the received signal.

**8.** A mobile communications terminal according to any one of claims 6 and 7, **characterized in that** the second means includes means (210;603) for monitoring the signal-to-interference ratio, SIR, of the received signal.

**9.** A mobile communications terminal according to any one of claims 1 through 8, **characterized in that** the processing means (201,204,210,220;603,604) comprises means (210; 604) for processing the communication signal in a first of at least two ways; the first way being selected from the at least two ways in dependence of a classified type of interference.

**10.** A mobile communications terminal according to any one of claims 1 through 9, **characterized in that** the processing means (201,204,210,220;603,604) comprises filter means (604) for processing the communication signal by means of a set of filter coefficients ($\alpha$) selected in dependence of a classified type of interference.

**11.** A mobile communications terminal according to claim 10, **characterized in that** the filter means is a low-pass filter (604); wherein the filter has a first band-width when interference is classified to be intra-cell interference and has a second band-width when interference is classified to be inter-cell interference, wherein said first bandwidth is higher than said second bandwidth.

**12.** A method for a mobile communications terminal adapted for use in a cellular communications system, said method comprising the steps of:

receiving a wire-less communications signal carrying signal channels and extracting the signal channels by means of an electronic circuit;
**characterized in** further comprising the step of:

by means of the electronic circuit providing at least one of the following signals: an Automatic Gain Control (AGC) signal; a transmission-power-control (TPC) signal; an estimate signal;
classifying a type of interference, affecting the communications quality, by evaluating the time domain behaviour of at least one of said signals provided by the electronic circuit; wherein said signals having information for classifying a type of interference in one of at least two predetermined classes of interference.

**13.** A method according to claim 12 **characterized in that** the a first class includes intercell interference and that a second class includes intracell interference.

**14.** A method according to any one of claims 12 and 13 **characterized in that** the method further comprises the step of processing the communication signal in a first of at least two ways (A1;A2); the first way being selected from the at least two ways in dependence of a classified type of interference.

**15.** A method according to any one of claims 12 through 14 **characterized in that** the method further comprises the step of filtering the communication signal with a low-pass filter; wherein the filter has a first band-width when interference is classified to be intra-cell interference and has a second band-width when interference is classified to be inter-cell interference, wherein said first bandwidth is higher than said second bandwidth.

**Patentansprüche**

**1.** Ein mobiles Kommunikationsendgerät zur Verwendung in einem zellularen Kommunikationssystem, umfassend eine elektronische Schaltung (200) zum Empfangen eines drahtlosen Kommunikationssignals, das Signalkanäle überträgt, mit Verarbeitungsmitteln (201, 204, 210, 220; 603, 604) zum Extrahieren der Signalkanäle, **gekennzeichnet dadurch, dass** die Verarbeitungsmittel (201, 204, 210, 220; 603, 604) angeordnet sind, mindestens eines der folgenden Signale bereitzustellen: ein Signal automatischer Verstärkungssteuerung (AGC); ein Signal von Übertragungsleistungssteuerung (TPC); ein Interferenzschätzungssignal; und
die elektronische Schaltung (200) angepasst ist, einen Typ von Interferenz, die die Kommunikationsqualität beeinträchtigt, zu klassifizieren durch Evaluieren des Zeitdomänenverhaltens von mindestens einem der Signale, die durch die Verarbeitungsmittel (201, 204, 210, 220; 603, 604) bereitgestellt werden, wodurch die Signale Information zum Klassifizieren eines Typs von Interferenz in einer von mindestens zwei vorbestimmten Klassen von Interferenz bereitstellen.

2. Ein mobiles Kommunikationsendgerät nach Anspruch 1, **gekennzeichnet dadurch, dass** eine erste Klasse von Interferenz Interzelleninterferenz enthält und dass eine zweite Klasse von Interferenz Intrazelleninterferenz enthält.

3. Ein mobiles Kommunikationsendgerät nach einem beliebigen von Ansprüchen 1 und 2, **gekennzeichnet dadurch, dass** das Verarbeitungsmittel (201, 204, 210, 220; 603, 604) ein erstes Mittel (204) mit ausgewählten Signalen zum adaptiven Regeln der Amplitude von Signalen umfasst, die durch die elektronische Schaltung verarbeitet werden.

4. Ein mobiles Kommunikationsendgerät nach Anspruch 3, **gekennzeichnet dadurch, dass** das erste Mittel (204) ein Mittel automatischer Verstärkungssteuerung enthält.

5. Ein mobiles Kommunikationsendgerät nach einem beliebigen von Ansprüchen 3 und 4, **gekennzeichnet dadurch, dass** das erste Mittel (201, 204, 210, 220; 603, 604) ein Mittel (210) mit ausgewählten Signalen zum Kommunizieren von Befehlen für eine Steuerung übertragener Leistung einer Basisstation enthält, die zum Kommunizieren mit einer Vielheit von mobilen Kommunikationsendgeräten fähig ist.

6. Ein mobiles Kommunikationsendgerät nach einem beliebigen von Ansprüchen 1 bis 5, **gekennzeichnet dadurch, dass** das Verarbeitungsmittel (201, 204, 210, 220; 603, 604) ein zweites Mittel mit ausgewählten Signalen zum Überwachen der Kommunikationsqualität (210) umfasst.

7. Ein mobiles Kommunikationsendgerät nach Anspruch 6, **gekennzeichnet dadurch, dass** das zweite Mittel ein Mittel (210) zum Überwachen der Signalstärke des empfangenen Signals enthält.

8. Ein mobiles Kommunikationsendgerät nach einem beliebigen von Ansprüchen 6 und 7, **gekennzeichnet dadurch, dass** das zweite Mittel ein Mittel (210; 603) zum Überwachen des Signal-zu-Interferenz-Verhältnisses, SIR, des empfangenen Signals enthält.

9. Ein mobiles Kommunikationsendgerät nach einem beliebigen von Ansprüchen 1 bis 8, **gekennzeichnet dadurch, dass** das Verarbeitungsmittel (201, 204, 210, 220; 603, 604) ein Mittel (210; 604) zum Verarbeiten des Kommunikationssignals auf einem ersten von mindestens zwei Wegen umfasst; wobei der erste Weg aus den mindestens zwei Wegen in Abhängigkeit eines klassifizierten Typs von Interferenz ausgewählt wird.

10. Ein mobiles Kommunikationsendgerät nach einem beliebigen von Ansprüchen 1 bis 9, **gekennzeichnet dadurch, dass** das Verarbeitungsmittel (201, 204, 210, 220; 603, 604) ein Filtermittel (604) zum Verarbeiten des Kommunikationssignals mittels einer Menge von Filterkoeffizienten (a) umfasst, die in Abhängigkeit eines klassifizierten Typs von Interferenz ausgewählt werden.

11. Ein mobiles Kommunikationsendgerät nach Anspruch 10, **gekennzeichnet dadurch, dass** das Filtermittel ein Tiefpassfilter (604) ist; wobei das Filter eine erste Bandbreite hat, wenn Interferenz klassifiziert ist, Intrazelleninterferenz zu sein, und eine zweite Bandbreite hat, wenn Interferenz klassifiziert ist, Interzelleninterferenz zu sein, wobei die erste Bandbreite höher als die zweite Bandbreite ist.

12. Ein Verfahren für ein mobiles Kommunikationsendgerät, das zur Verwendung in einem zellularen Kommunikationssystem angepasst ist, das Verfahren die Schritte umfassend:

Empfangen eines drahtlosen Kommunikationssignals, das Signalkanäle überträgt, und Extrahieren der Signalkanäle mittels einer elektronischen Schaltung;
**gekennzeichnet**, weiter den Schritt zu umfassen:

mittels der elektronischen Schaltung Bereitstellen mindestens eines der folgenden Signale: ein Signal automatischer Verstärkungssteuerung (AGC); ein Signal von Übertragungsleistungssteuerung (TPC); ein Interferenzschätzungssignal;

Klassifizieren eines Typs von Interferenz, die die Kommunikationsqualität beeinträchtigt, durch Evaluieren des Zeitdomänenverhaltens von mindestens einem der Signale, die durch die elektronische Schaltung bereitgestellt werden, wobei die Signale Information zum Klassifizieren eines Typs von Interferenz in einer von mindestens zwei vorbestimmten Klassen von Interferenz haben.

13. Ein Verfahren nach Anspruch 12, **gekennzeichnet dadurch, dass** die eine erste Klasse Interzelleninterferenz enthält und dass eine zweite Klasse Intrazelleninterferenz enthält.

14. Ein Verfahren nach einem beliebigen von Ansprüchen 12 und 13, **gekennzeichnet dadurch, dass** das Verfahren ferner den Schritt zum Verarbeiten des Kommunikationssignals auf einem ersten von mindestens zwei Wegen (A1; A2) umfasst; wobei der erste Weg aus den mindestens zwei Wegen in Abhängigkeit eines klassifizierten Typs von Interferenz ausgewählt wird.

15. Ein Verfahren nach einem beliebigen von Ansprüchen 12 bis 14, **gekennzeichnet dadurch, dass** das Verfahren ferner den Schritt zum Filtern des Kommunikationssignals mit einem Tiefpassfilter umfasst; wobei das Filter eine erste Bandbreite hat, wenn Interferenz klassifiziert ist, Intrazelleninterferenz zu sein, und eine zweite Bandbreite hat, wenn Interferenz klassifiziert ist, Interzelleninterferenz zu sein, wobei die erste Bandbreite höher als die zweite Bandbreite ist.

**Revendications**

1. Terminal de télécommunications mobiles pour utilisation dans un système cellulaire de télécommunications, comprenant :

   un circuit électronique (200) destiné à recevoir un signal de télécommunications sans fil transportant des voies de signal comportant des moyens (201, 204, 210, 220 ; 603, 604) de traitement destinés à extraire les voies de signal ;
   **caractérisé en ce que** lesdits moyens (201, 204, 210, 220 ; 603, 604) de traitement sont agencés pour fournir au moins l'un des signaux suivants : un signal de commande automatique de gain (CAG) ; un signal de commande de puissance d'émission (TPC pour "Transmission Power Control") ; un signal d'estimation de brouillage ; et
   **en ce que** le circuit électronique (200) est conçu pour classer un type de brouillage, affectant la qualité des télécommunications, en évaluant le comportement dans le domaine temporel d'au moins l'un desdits signaux fournis par les moyens (201, 204, 210, 220 ; 603, 604) de traitement, lesdits signaux fournissant ainsi de l'information pour classer un type de brouillage dans l'une d'au moins deux classes prédéterminées de brouillage.

2. Terminal de télécommunications mobiles selon la revendication 1, **caractérisé en ce qu'**une première classe de brouillage comprend du brouillage entre cellules, et **en ce qu'**une deuxième classe de brouillage comprend du brouillage interne à une cellule.

3. Terminal de télécommunications mobiles selon l'une quelconque des revendications 1 et 2, **caractérisé en ce que** le moyen (201, 204, 210, 220 ; 603, 604) de traitement comprend un premier moyen (204) avec des signaux choisis pour régler de façon adaptative l'amplitude de signaux traités par le circuit électronique.

4. Terminal de télécommunications mobiles selon la revendication 3, **caractérisé en ce que** le premier moyen (204) comprend un moyen de commande automatique de gain.

5. Terminal de télécommunications mobiles selon l'une quelconque des revendications 3 et 4, **caractérisé en ce que** le premier moyen (201, 204, 210, 220 ; 603, 604) comprend un moyen (210) avec des signaux choisis pour transmettre des instructions destinées à commander la puissance d'émission d'une station de base capable de communiquer avec une multitude de terminaux de télécommunications mobiles.

6. Terminal de télécommunications mobiles selon l'une quelconque des revendications 1 à 5, **caractérisé en ce que** le moyen (201, 204, 210, 220 ; 603, 604) de traitement comprend un deuxième moyen avec des signaux choisis pour surveiller la qualité (210) de télécommunications.

7. Terminal de télécommunications mobiles selon la revendication 6, **caractérisé en ce que** le deuxième moyen comprend un moyen (210) destiné à surveiller l'intensité de signal du signal reçu.

8. Terminal de télécommunications mobiles selon l'une quelconque des revendications 6 et 7, **caractérisé en ce que** le deuxième moyen comprend un moyen (210 ; 603) destiné à surveiller le rapport signal sur bruit (SIR pour "Signal Interference Ratio") du signal reçu.

9. Terminal de télécommunications mobiles selon l'une quelconque des revendications 1 à 8, **caractérisé en ce que** le moyen (201, 204, 210, 220 ; 603, 604) de traitement comprend un moyen (210 ; 604) destiné à traiter le signal de communication d'une première d'au moins deux façons ; la première façon étant choisie à partir d'au moins deux façons d'après un type de brouillage classé.

10. Terminal de télécommunications mobiles selon l'une quelconque des revendications 1 à 9, **caractérisé en ce que** le moyen (201, 204, 210, 220 ; 603, 604) de traitement comprend un moyen (604) de filtrage destiné à traiter le signal de communication au moyen d'un ensemble de coefficients ($\alpha$) de filtre choisi d'après un type de brouillage classé.

11. Terminal de télécommunications mobiles selon la revendication 10, **caractérisé en ce que** le moyen de filtrage est un filtre passe-bas (604) ; dans lequel le filtre présente une première largeur de bande lorsque le brouillage est classé comme étant du brouillage interne à une cellule et présente une seconde largeur de bande lorsque le brouillage est classé comme étant du brouillage entre cellules, dans lequel ladite première largeur de bande est plus haute que ladite seconde largeur de bande.

12. Procédé pour un terminal de télécommunications mobiles conçu pour utilisation dans un système cellulaire de télécommunications, ledit procédé comprenant les étapes :

de réception d'un signal de télécommunications sans fil transportant des voies de signal et d'extraction des voies de signal au moyen d'un circuit électronique ;
**caractérisé en ce qu'**il comprend en outre l'étape :

au moyen du circuit électronique fournissant au moins l'un des signaux suivants : un signal de commande automatique de gain (CAG) ; un signal de commande de puissance d'émission (TPC pour "Transmission Power Control") ; un signal d'estimation de brouillage ; de classement d'un type de brouillage, affectant la qualité de télécommunications, en évaluant le comportement dans le domaine temporel d'au moins l'un desdits signaux fournis par le circuit électronique ; dans lequel lesdits signaux comportent de l'information pour classer un type dans l'une d'au moins deux classes prédéterminées de brouillage.

13. Procédé selon la revendication 12, **caractérisé en ce qu'**une première classe comprend du brouillage entre cellules et **en ce qu'**une deuxième classe comprend du brouillage interne à une cellule.

14. Procédé selon l'une quelconque des revendications 12 et 13, **caractérisé en ce que** le procédé comprend en outre l'étape de traitement du signal de communication d'une première d'au moins deux façons (A1 ; A2) ; la première façon étant choisie à partir d'au moins deux façons d'après un type de brouillage classé.

15. Procédé selon l'une quelconque des revendications 12 à 14, **caractérisé en ce que** le procédé comprend en outre l'étape de filtrage du signal de communication à l'aide d'un filtre passe-bas ; dans lequel le filtre présente une première largeur de bande lorsque le brouillage est classé comme étant du brouillage interne à une cellule et présente une seconde largeur de bande lorsque le brouillage est classé comme étant du brouillage entre cellules, dans lequel ladite première largeur de bande est plus haute que ladite seconde largeur de bande.

Fig. 1

Fig. 6

Fig. 2

301

AGC-GAIN →

TPC →

C

INT →

S →

INTRA → A1

INTER → A2

IN

302

OUT

Fig. 3

501 Receive signal

502 TST1 → INTRA 506

503 TST2 → INTER 505

→ No INT 504

Fig. 5

13

Fig. 4